# EUROPEAN PATENT APPLICATION

(11) **EP 3 144 863 A1**
(43) Date of publication of application: **22.03.2017**
(21) Application number: 16188878.9
(22) Date of filing: 15.09.2016
(51) Int. Cl.: G06Q 10/06

(54) **HIGHLY FLEXIBLE, USER FRIENDLY WIDGETS FOR HEALTH AND USAGE MANAGEMENT SYSTEMS**

(30) Priority: 15.09.2015 US 201514854614
(71) Applicant: Simmonds Precision Products, Inc., Vergennes, VT 05491 (US)
(72) Inventor: BERENBAUM, Arthur, Addison, VT Vermont 05491 (US); BERGERON, Jessica L., Vergennes, VT Vermont 05491 (US)
(74) Representative: Bridge, Kerry Ann

(57) **Abstract**

The disclosure herein relates to generating a widget (320, 330) within a health and usage management system according to a widget management logic. The widget management logic includes generating (210) a complex filter based on filter types and values is generated to manipulate data of the health and usage management system. The complex filter can output search results. Next, the widget management logic generates (220) the widget to correspond to the complex filter and the search results. The widget (320, 330) is utilized to access the search results without subsequent selection of the filter types and values or manipulation of the data.

## Description

### BACKGROUND

Embodiments herein relate generally to highly flexible, user friendly widgets for health and usage management system application software, and more specifically, to health and usage management system application software system where a technically savvy user leverages the power of deep filtering and creates widgets available to other end-users for their daily analysis activities.

A health and usage management system (HUMS) is a sensor-based monitoring system that enables condition-based monitoring of parts on systems comprised of complex rotating machinery, such as rotary aircraft. The nature of a HUMS is that it produces large amounts of complex data that is typically displayed to users in ground-based application software. The users of such application software systems have varied objectives in analyzing the data but all users require the ability to find the data that they care about as quickly as possible. Contemporary software systems have been oriented toward a certain type of user (e.g. Aircraft Maintainer) and have provided inconsistent mechanisms for filtering of the HUMS data.

For example, contemporary software systems have the following issues: inconsistent user experience for filtering of HUMS data; limited filtering options; filtering options focused upon a single type of user; existence of user options to select data that does not exist; limited options for interdependent filtering; inability to perform text-based search-like filtering; inability to save and recall filters for use in filtering new data; inability to easily share filtering context across tools within the same application software system; inability to easily share filtering context across application software systems; inability to easily share filtering context across corporate and information technology network boundaries; high overhead (cost) for introducing new tools and data types; lack of role-based filtering; lack of security context sensitivity for filtering; inflexible and incomplete export options; inflexible and incomplete report options; etc.

In addition, while contemporary software systems have provided powerful approaches for filtering of HUMS data, their filtering interfaces are too complex for an average end-user of HUMS data. For instance, the filtering interfaces have the following issues: too many choices; not enough mistake-proofing; too easy for an end-user to select options that result in more or less data than expected; too easy for an end-user to select options that result in different data than what they wanted; etc.

### SUMMARY

According to an embodiment, a method for generating a widget within a health and usage management system according to a widget management logic is provided. The method comprises generating, by a processing device of the health and usage management system coupled to a memory, a complex filter based on selected filter types and values, the complex filter being configured to manipulate data of the health and usage management system; executing, by the processing device, the complex filter to generate search results; and generating, by the processing device, the widget corresponding to the complex filter and the search results, the widget being utilized to access the search results without subsequent selection of the filter types and values or manipulation of the data.

According to another embodiment or the method embodiment above, the request for the widget can identify particular data sets of the health and usage management system to analyze.

According to another embodiment or any of the method embodiments above, the search results can include graphical representations of the data of the health and usage management system.

According to another embodiment or any of the method embodiments above, the widget can be a user interface element that visually represents the data in summary form.

According to another embodiment or any of the method embodiments above, the user interface element can provide a status visualization of the data.

According to another embodiment or any of the method embodiments above, the status visualization of the data can be an icon or a complex visualization.

According to another embodiment or any of the method embodiments above, the widget management logic can include a tiered user structure comprising a first level and a second level.

According to another embodiment or any of the method embodiments above, the first level can define user rights for savvy users and the second level defines user rights for average users.

According to another embodiment or any of the method embodiments above, the method can comprises selecting filter types and filter values in response to receiving a request for the widget to produce selected filter types and filter values.

According to an embodiment, a computer program product is provided. The computer program product comprises a computer readable storage medium having program instructions for generating a widget within a health and usage management system according to a widget management logic embodied therewith, the program instructions executable by a processor of the health and usage management system to cause the processor to perform: selecting filter types and filter values in response to receiving a request for the widget; generating a complex filter based on the filter types and values, the complex filter being configured to manipulate data of the health and usage management system; executing the complex filter to generate search results; and generating the widget corresponding to the complex filter and the search results, the widget being utilized to access the search results without subsequent selection of the filter types and values or manipulation of the data.

According to another embodiment or the computer program product embodiment above, the request for the widget can identify particular data sets of the health and usage management system to analyze.

According to another embodiment or any of the computer program product embodiments above search results can include graphical representations of the data of the health and usage management system.

According to another embodiment or any of the computer program product embodiments above the widget can be a user interface element that visually represents the data in summary form.

According to another embodiment or any of the computer program product embodiments above the user interface element can provide a status visualization of the data.

According to another embodiment or any of the computer program product embodiments above the status visualization of the data can be an icon or a complex visualization.

According to another embodiment or any of the computer program product embodiments above the widget management logic can include a tiered user structure comprising a first level and a second level.

According to another embodiment or any of the computer program product embodiments above the first level can define user rights for savvy users and the second level defines user rights for average users.

Additional features and advantages are realized through the techniques of the present disclosure. Other embodiments and aspects of the disclosure are described in detail herein. For a better understanding of the disclosure with the advantages and the features, refer to the description and to the drawings.

### BRIEF DESCRIPTION OF THE DRAWINGS

The subject matter which is regarded as the invention is particularly pointed out and distinctly claimed in the claims at the conclusion of the specification. The forgoing and other features, and advantages of the invention are apparent from the following detailed description taken in conjunction with the accompanying drawings in which:
FIG. 1 illustrates a health and usage management system in accordance with an embodiment;
FIG. 2 illustrates a process flow for generating widgets within a HUMS in accordance with an embodiment;
FIG. 3 illustrates an interface including widgets generated by HUMS in accordance with an embodiment;
FIG. 4 illustrates an interface process flow for generating widgets within a HUMS in accordance with an embodiment; and
FIG. 5 illustrates another process flow for generating widgets within a HUMS in accordance with an embodiment.

### DETAILED DESCRIPTION

Embodiments described herein relate to a Health and Usage Management System (HUMS) application software system where a technically savvy user leverages the power of deep filtering mechanisms to create widgets that can be made available to average end-users for their daily analysis activities.

In general, a HUMS comprises data collection, analysis, and storage techniques that ensure availability, reliability and safety of vehicles. The data from the HUMS includes parametric information that indicates a state of a vehicle, such as pilot controls, vehicle speed, roll angle, etc., and includes vibration data, which is utilized for vibration analyses and diagnostics. Further, load information can be inferred or estimated from the state parameters (parametric data) collected by HUMS and/or other aircraft data recording devices.

The HUMS can also include a computing sub-system and/or remote sub-systems that are configured to operate according to a tiered user structure of a widget management logic. A processor of the computing sub-system and/or remote sub-systems may receive the widget management logic via computer readable program instructions from a memory (of the computing sub-system and/or remote sub-systems) and execute these instructions, thereby performing one or more processes defined by the widget management logic. The widget management logic, in general, includes operations and processes of creating and providing widgets that enhance the overall filtering mechanisms of the HUMS.

Widgets are user interface elements that visually represent different types of data in summary form. For examples, the widgets can provide a brief overview of and access to the underlying parametric data and limited operations without subsequent selection of filter types and values that render the summary. Widgets, in general, are designed to handle any kind of parametric data. In turn, a widget is unaware of the specific underlying parametric data. In embodiments of the present disclosure, widgets can also include a definition about the parametric data to alert users as to operations of the widgets. Further, any instance of a widget can be specialized with respect to a sub-interface that that widget can invoke, such that any widget is displaying status information corresponding to specific types of parametric data for which that widget was designed. A widget can also include status information depicted as an icon, such as colored "light," or as a complex visualization, such as a graph. In this way, a widget can also be associated with an algorithm for computing particular status information. For example, an alerting algorithm can detect whether a parameter value has crossed a threshold, while a complex algorithm may use various analytical methods such as statistical methods, linear algebra, etc. to detect a condition of importance to the viewer. The icon can indicate warnings, the existence or non-existence of fault conditions, etc. The visualizations presented by the widgets can be non-interactive or minimally interactive, whereas visualizations in a corresponding sub-interface can be fully interactive. Thus, the widget is used to retrieve and visualize an ever-changing data set, as more aircraft data becomes available that meets the criteria of the underlying complex filter.

The widget management logic can also define a tiered user structure. For example, the tiered user structure can include a two-tier user level.

A first level of the two-tier user level can include technically savvy users (e.g., first level users) who are trained to construct deep filters, understand filter types, and can coordinate filter values to build and execute parameter graphing searches (a.k.a. complex searches or filters) for manipulating and procuring data of the HUMS. For example, a first level user can build a complex filter by determining particular data sets of the HUMS to analyze, respective time ranges, whether other types of information should be included, engine types, etc. The first level users can further save and store any complex filter as a widget. For example, a first level users can store a 'saved search' and combine the saved search with a user interface element (e.g., 'widget template') to generate a widget that corresponds to the 'saved search.'

A second level of the two-tier user level can include end-users (e.g., second level users) who do not have first level access but can access and rerun the complex filters generated by first level users through the widgets. That is, the second level users will have access to the underlying parametric data or filters through the widgets, while being prevented from having manipulation access. Further, the second level users can request data particular to a certain parameter, which the first level users can utilize to build a complex filter and render a corresponding widget. Thus, first level (or end-) users reap the benefits of a second level (or savvy) user's understanding of the HUMS.

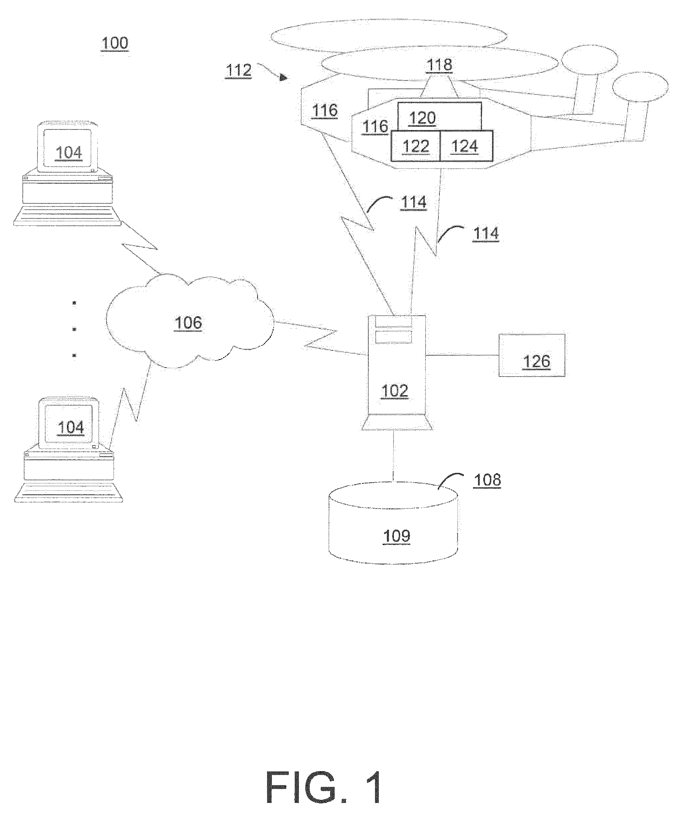

Turning now to FIG. 1, a HUMS 100 is generally shown in accordance with an embodiment. The HUMS system 100 includes a computing sub-system 102 in communication with remote sub-systems 104 over a network 106. The computing sub-system 102 can access a database 108 to read and write data 109 in response to requests from the remote sub-systems 104.

The computing sub-system 102 is a computing device (e.g., a mainframe computer, a desktop computer, a laptop computer, or the like) including at least one processing circuit (e.g., a CPU) capable of reading and executing instructions stored on a memory therein, and handling numerous interaction requests from the remote sub-systems 104. The computing sub-system 102 may also represent a cluster of computer systems collectively performing processes as described in greater detail herein. The remote sub-systems 104 can also comprise of desktop, laptop, general-purpose computer devices, and/or networked devices with processing circuits and input/output interfaces, such as a keyboard and display device.

The computing sub-system 102 and/or the remote sub-systems 104 are configured to provide a process, where a processor may receive computer readable program instructions from a widget management logic (as described below) of the memory and execute these instructions, thereby performing one or more processes defined by the widget management logic. The processor may include any processing hardware, software, or combination of hardware and software utilized by the computing sub-system 102 and/or the remote sub-systems 104 that carries out the computer readable program instructions by performing arithmetical, logical, and/or input/output operations. For example, the computer readable program instruction may include deep filtering and widget creation for end-users analysis activities.

The memory may include a tangible device that retains and stores computer readable program instructions, as provided by the widget management logic, for use by the processor of the computing sub-system 102 and/or the remote sub-systems 104. The computing sub-system 102 and/or the remote sub-systems 104 can include various computer hardware and software technology, such as one or more processing units or circuits, volatile and non-volatile memory including removable media, power supplies, network interfaces, support circuitry, operating systems, user interfaces, and the like. Remote users can initiate various tasks locally on the remote sub-systems 104, such as requesting data 109 from the ground-based system 102 via secure clients 110.

The network 106 may be any type of communications network, including a local area network (LAN) or a wide area network (WAN), or the connection may be made to an external computer (for example, through the Internet using an Internet Service Provider). For example, a network may be the Internet, a local area network, a wide area network, satellite network, and/or a wireless network, comprise copper transmission cables, optical transmission fibers, wireless transmission, routers, firewalls, switches, gateway computers and/or edge servers, and utilize a plurality of communication technologies, such as radio technologies, satellite technologies, cellular technologies, etc.

The maintenance database 108 may include a database, data repository, or other data store and may include various kinds of mechanisms for storing, accessing, and retrieving various kinds of data 109, including a hierarchical database, a set of files in a file system, an application database in a proprietary format, a relational database management system (RDBMS), etc. The data 109 of the maintenance database 108 can include empirical models, estimated data, estimated featured, sensed data, damage metrics, maintenance schedules, maintenance policies, etc. For example, the data 109 can include over 500,000 flight hours of archived historical fleet data for a rotorcraft, and estimated tail rotor torque (TRQ) loads to support assessment and refinement of the load spectrum for design, testing, and certification of drivetrain components.

The computing sub-system 102 and/or the remote sub-systems 104 are also configured to communicate with an aircraft fleet 112 via communication links 114. The aircraft fleet 112 can include a variety of aircraft 116, such as fixed-wing and rotorcrafts. While a rotorcraft is shown in FIG. 1, it shall be understood that the teachings herein are applicable to any type of aircraft, including airplanes. The communication links 114 can be wireless communication links. The communication links 114 may also support wired and/or optical communication when the aircraft 116 are on the ground and within physical proximity to the computing sub-system 102. In exemplary embodiments, the computing sub-system 102 and other components of the HUMS 100 may be integral to the aircraft 116, such that the HUMS 100 reliably and automatically measures sensor data to estimate structural loads and apply the estimated structural loads, while compensating for the normal variation in loads. Further, in exemplary embodiments, the aircraft fleet 112 transmits flight data to the computing sub-system 102 for load spectrum assessment and refinement, structural fault detection, etc.

In the example depicted in FIG. 1, each aircraft 116 is a rotorcraft with a main rotor 118 capable of revolving at a sufficient velocity to sustain flight. Aircraft 116 also includes a monitoring sub-system 120 configured to receive sensor data, such as a combination of low-frequency state parametric data and high frequency state parametric data, from sensors 122, 124 (e.g., low-frequency sensors and high-frequency sensors).

The monitoring sub-system 120, the sensors 122, and sensors 124 are communicatively coupled and may be incorporated with or external to each other. During rotorcraft operation, the sensor data is acquired by the monitoring sub-system 120 from the sensors 122, 124 and supplied to other elements of the HUMS 100. Also, during testing of the monitoring sub-system 120, measured state parameters and measured loads of a test aircraft are acquired by the HUMS 100.

The sensors 122, 124 are converters that measure physical quantities and convert these physical quantities into a signal (e.g., sensor data) that is read by the monitoring sub-system 120, and in turn the HUMS 100. In one embodiment, the sensors 122, 124 are strain gauges that measure the physical stress applied to a component of the aircraft 116 (e.g., a landing gear assembly, etc.). Examples of strain gauges include fiber optic gauges, foil gauges, capacitive gauges, etc. In another embodiment, the sensors 122, 124 are temperature sensors that measure the temperature characteristics and/or the physical change in temperature of an aircraft frame. Examples of temperature sensor include fiber optic nano temperature sensor, heat meter, infrared thermometer, liquid crystal thermometer, resistance thermometer, temperature strip, thermistor, thermocouple, and the like. In another embodiment, the sensors 122, 124 are vibration and tracking sensors that measure vibration data throughout the aircraft 116. Examples of vibration and tracking sensors include accelerometers, tachometers, along with indexers and cameras called "trackers" that perform edge detection for spinning rotor blades on rotorcraft In any of the embodiments, the sensors 122, 124 may be located within a housing to provide protection for the sensors 122, 124 from materials that may cause structural damage to the sensors 122, 124 (e.g., or that may occlude the optically capabilities of the sensors 122, 124).

Furthermore, the sensor 122, 124 are representative of a plurality of sensors monitoring different location and portions of each aircraft 116 with respect to different loads For example, a first sensor 122 may be located on a main rotor shaft to detect a main rotor torque; a second sensor 122 may be located on a main rotor hub to detect bending with respect to the main rotor shaft; a third sensor 122 may be located on a bearing to detect loads on that bearing; a fourth sensor 124 may be an accelerometer located near a main gearbox to monitor the health of gears, shafts, and bearings of a drivetrain; a fifth sensor 124 may be an tachometer/indexer located near a drivetrain shaft to measure a rotational speed of that shaft; a sixth sensor 124 may be an tracker located in an optimal position to capture rotational and tracking characteristics of rotorcraft blades, etc.). Irrespective of the precise location, the sensors 122, 124 can also be positioned in different orientations so that different directional forces may be detected. Thus, the sensor 122, 124 ultimately allow the HUMS 100 to provide information about the condition of the aircraft 116 and its parts, not just the lower level sensor data (e.g., loads, strains, vibrations, etc.).

In addition to the above, the computing sub-system 102 includes a load widget management application 126 ("application 126") comprising computer readable program instructions configured to perform deep filtering and widget creation for end-users analysis activities. For example, the application 126 can provide user-friendly access to the power of deep filtering of data 109 by providing filter saving and retrieval mechanisms; filter-sensitive navigation mechanism; micro-widgets; mini-widgets; widget rendering engine; status query string format; and/or full tool interfaces, each of which overcome the shortcomings of the contemporary software systems described above. In turn, the application 126 can perform the operations of acquiring flight data of the rotorcraft (e.g., aircraft 116), transfer of the flight data from the rotorcraft to the database 108 to produce the data 109, managing the database 108 and the data 109, performing deep filtering on the data 109, and creating and storing widgets that recall the deep filtering.

While the application 126 (and other items by each FIG) is illustrated as a single item, these representations are not intended to be limiting and thus, the application 126 items may represent a plurality of applications. For example, multiple applications in different locations may be utilized to access the collected information, and in turn those same applications may be used for on-demand data retrieval. In addition, although one breakdown of the application 126 is offered, it should be understood that the same operability may be provided using fewer, greater, or differently named modules.

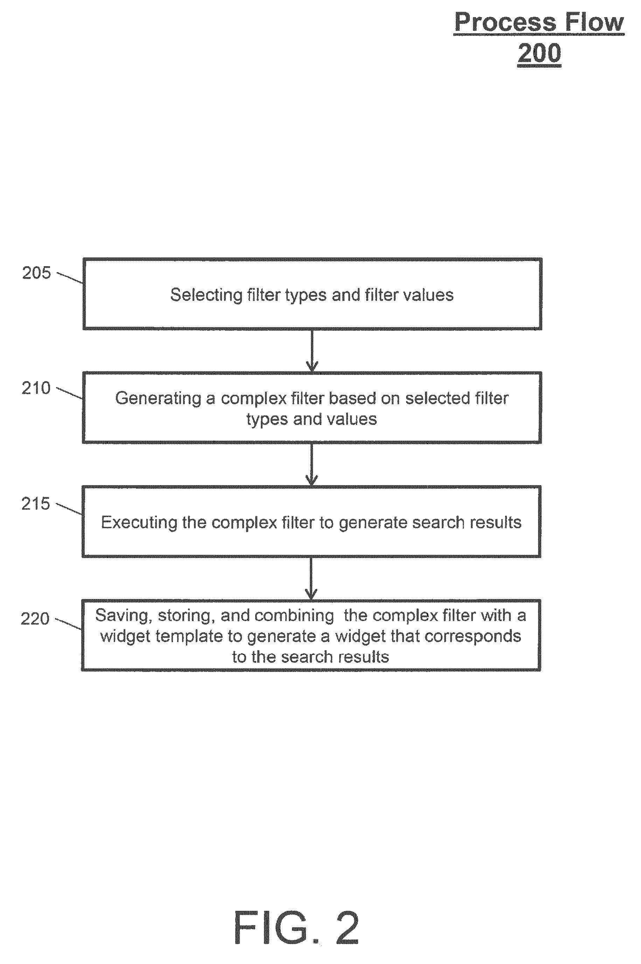

In view of the above, the HUMS 100 and elements therein of the FIG. 1 (and other FIGs) may take many different forms and include multiple and/or alternate components and facilities. That is, while the HUMS 100 is shown in FIG. 1, the components illustrated in FIG. 1 and other FIGS. are not intended to be limiting. Indeed, additional or alternative components and/or implementations may be used. For instance, the HUMS 100 can perform any combination processes, as further described with respect to FIGS. 2-5.

FIG. 2 illustrates a process flow 200 for generating widgets within a HUMS in accordance with an embodiment. The process flow 200 begins at block 205, where the computing device 102 selects filter types and filter values. The selection of the filter types and filter values can be responsive to a user input through a graphic user interface from a first level user. For example, the first level user can provide inputs that identify particular data sets of the HUMS to analyze, respective time ranges, whether other types of information should be included, engine types, etc.

Next, at block 210, the computing device 102 generates a complex filter based on the selected filter types and values. Then, at block 215, the computing device 102 executes the complex filter to generate search results. In one example, the complex filter manipulates the data 109 of the HUMS 100 to generate, as the search results, graphical representations of the underlying data 109. If the graphical representations meet the desired effect of the selected filter types and values, then the process flow 200 proceeds to block 220. At block 220, the computing device 102 saves, stores, and combines the complex filter with a user interface element ("widget template") to generate a widget for the corresponding search results.

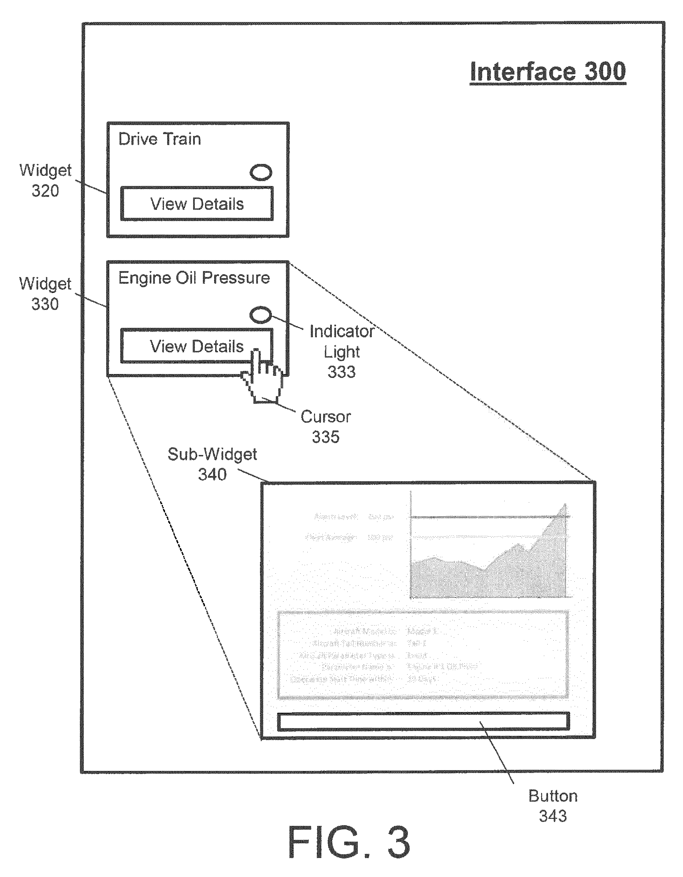

Turning now to FIG. 3, an interface 300 depicting widgets 320, 330 is shown in accordance with an embodiment. The widgets are examples of the widget generated at block 220 of FIG. 2. Note that each widget 320, 330 includes a title or operation name, an indicator light 333, and a selectable button. The operation name can indicate or correspond a definition about the search results to alert users as to the operations of each widget 320, 330. The indicator light 333 provides an immediately recognizable visualization of status information, such as a green light or a red light indicating whether the data returned by the complex filter has triggered any type of alarm or warning condition that may be important to users of the widget. The selectable button, which is labeled with 'View Details,' can enable a rendering of a sub-interface. For example, when the selectable button of widget 330 is selected by a cursor 335, a sub-widget 340 corresponding to the widget 330 is generated. The sub-widget 340 includes a non-interactive graphical visualizations of the data 109 accessed and manipulated by the complex filter associated with the widget 330. The sub-widget 340 includes a button 343 that, when selected, activates a 'Go To Parameter Graphing Tool' that renders a sub-interface that allows a user to zoom into a graph, change colors, change line styles, perform complex changes to the data set and filters, etc.

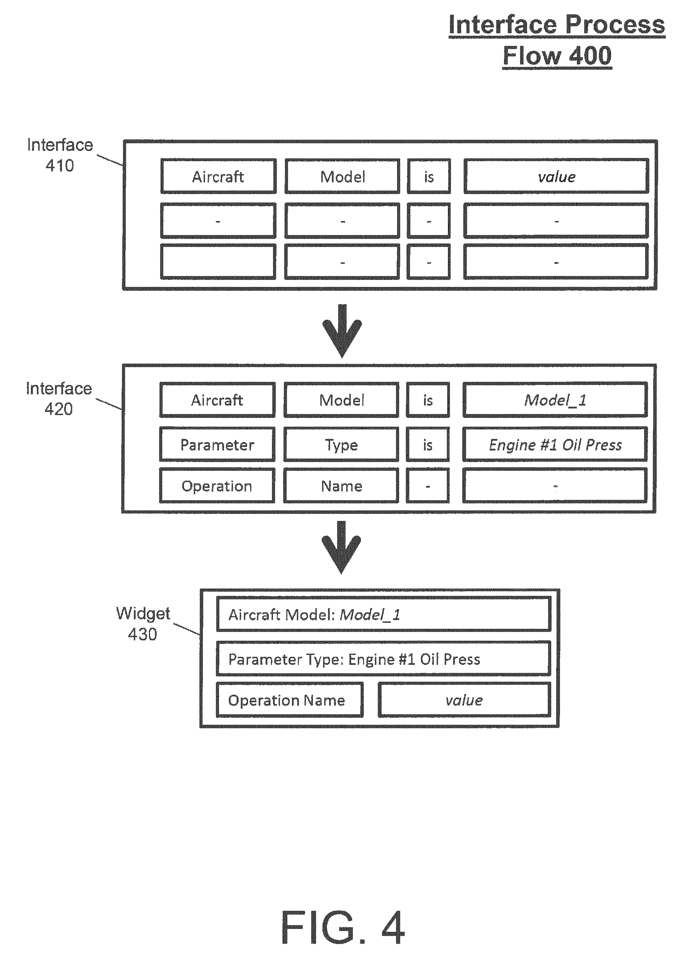

Turning now to FIG. 4, an interface process flow 400 for generating widgets within the HUMS 100 is illustrated in accordance with an embodiment. FIG. 4 shows that a widget is capable of providing configurable fields to the second level users. For example, the first level user can configure an interface 410 to select field types and values, such as by indicating that a first search parameter is an 'Aircraft Model.' Then, in interface 420, the first level user determines that the first search parameter will be with respect to 'Model_1' aircraft models. In addition, the first level user defines a search parameter type to be 'Engine #1 Oil Press;' however, the first level user leaves the operation name blank prior to generating a widget 430. While the widget 430 as depicted does not include status visualizations because some of the filter values are still empty, status visualizations can be included using fields that have already been provided/manipulated by the first level user.

By leaving a blank field in the interface 420, the first level user can provide configurability of the widget to a second level user. Note that the second level user can choose to enter a 'value' for the operation name of the widget 430. Accordingly, the second level user benefits by the first level user having made most of the decisions for them. Further, the second level user benefits from the fact that the widget 430 doesn't have the level of configurability and thus complexity that the interface 410 and the interface 420 provide.

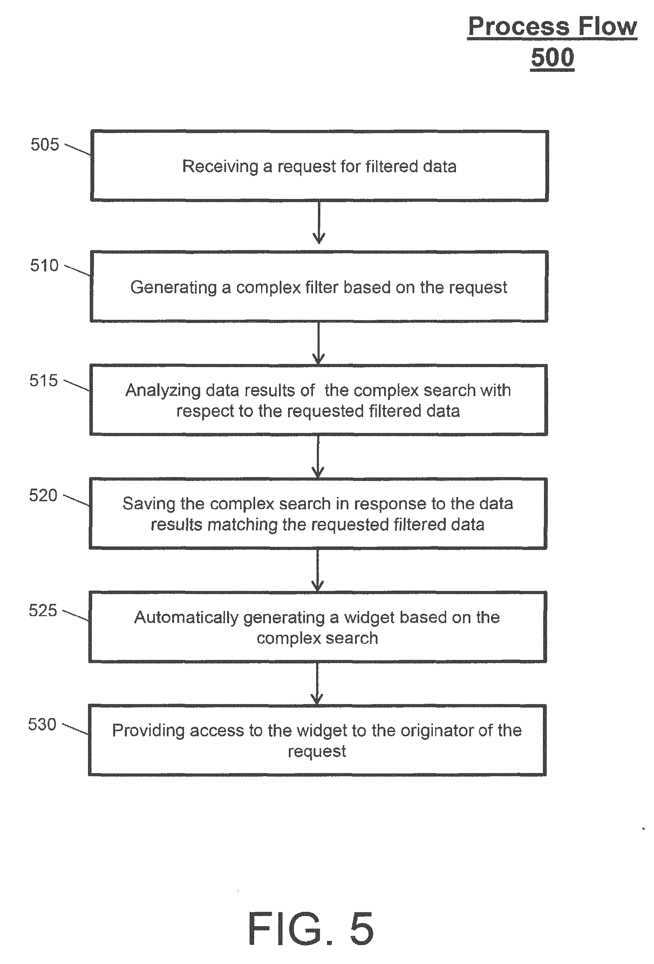

In view of the above, FIG. 5 illustrates another process flow 500 for generating widgets within the HUMS 100 in accordance with an embodiment. The process flow 500 begins at block 505, where a request for filtered data is received. In this regard, a second level user can send a request for filtered data from a remote sub-system 104 to the computing device 102. Next, at block 510, a complex filter is generated based on the request. For example, after the first level user (who accesses the computing device 102 from another remote sub-system 104) receives and reviews the request for the filtered data, the first level user directs the remote sub-system 104 to generate a complex filter based on the request.

Then, at block 515, the first level user analyzes the data results produced by executing the complex filter to determine whether the data results match the request of block 505. If the data results are determined to match the request, the process flow 500 proceeds to block 520 where the complex search is saved (in the database 108). At block 525, the computing device 102 can automatically generate a widget based on the saved complex search. Then, at block 530, access to the widget is provided to the second level user, who originated the request.

Technical effects and benefits of the embodiments herein include overcoming filtering shortcomings of contemporary software systems by enhancing the overall filtering mechanisms of the HUMS data through user friendly widgets. Technical effects and benefits of the widgets include a rendering engine that automatically displays the saved searches in a way that's accessible to average end-users. Thus, the widgets and widget management logic are necessarily rooted in the HUMS to overcome problems arising in the contemporary software systems.

According to an embodiment, a method for generating a widget within a health and usage management system according to a widget management logic is provided. The method comprises generating, by a processing device of the health and usage management system coupled to a memory, a complex filter based on selected filter types and values, the complex filter being configured to manipulate data of the health and usage management system; executing, by the processing device, the complex filter to generate search results; and generating, by the processing device, the widget corresponding to the complex filter and the search results, the widget being utilized to access the search results without subsequent selection of the filter types and values or manipulation of the data.

According to another embodiment or the method embodiment above, the request for the widget can identify particular data sets of the health and usage management system to analyze.

According to another embodiment or any of the method embodiments above, the search results can include graphical representations of the data of the health and usage management system.

According to another embodiment or any of the method embodiments above, the widget can be a user interface element that visually represents the data in summary form.

According to another embodiment or any of the method embodiments above, the user interface element can provide a status visualization of the data.

According to another embodiment or any of the method embodiments above, the status visualization of the data can be an icon or a complex visualization.

According to another embodiment or any of the method embodiments above, the widget management logic can include a tiered user structure comprising a first level and a second level.

According to another embodiment or any of the method embodiments above, the first level can define user rights for savvy users and the second level defines user rights for average users.

According to another embodiment or any of the method embodiments above, the method can comprises selecting filter types and filter values in response to receiving a request for the widget to produce selected filter types and filter values.

According to an embodiment, a computer program product is provided. The computer program product comprises a computer readable storage medium having program instructions for generating a widget within a health and usage management system according to a widget management logic embodied therewith, the program instructions executable by a processor of the health and usage management system to cause the processor to perform: selecting filter types and filter values in response to receiving a request for the widget; generating a complex filter based on the filter types and values, the complex filter being configured to manipulate data of the health and usage management system; executing the complex filter to generate search results; and generating the widget corresponding to the complex filter and the search results, the widget being utilized to access the search results without subsequent selection of the filter types and values or manipulation of the data.

According to another embodiment or the computer program product embodiment above, the request for the widget can identify particular data sets of the health and usage management system to analyze.

According to another embodiment or any of the computer program product embodiments above search results can include graphical representations of the data of the health and usage management system.

According to another embodiment or any of the computer program product embodiments above the widget can be a user interface element that visually represents the data in summary form.

According to another embodiment or any of the computer program product embodiments above the user interface element can provide a status visualization of the data.

According to another embodiment or any of the computer program product embodiments above the status visualization of the data can be an icon or a complex visualization.

According to another embodiment or any of the computer program product embodiments above the widget management logic can include a tiered user structure comprising a first level and a second level.

According to another embodiment or any of the computer program product embodiments above the first level can define user rights for savvy users and the second level defines user rights for average users.

The present invention may be a system, a method, and/or a computer program product. The computer program product may include a computer readable storage medium (or media) having computer readable program instructions thereon for causing a processor to carry out aspects of the present invention. The computer readable storage medium can be a tangible device that can retain and store instructions for use by an instruction execution device.

The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A method for generating a widget (320, 330) within a health and usage management system according to a widget management logic, comprising:
generating (210), by a processing device of the health and usage management system coupled to a memory, a complex filter based on selected filter types and values, the complex filter being configured to manipulate data of the health and usage management system;
executing (215), by the processing device, the complex filter to generate search results; and
generating (220), by the processing device, the widget (320, 330) corresponding to the complex filter and the search results, the widget being utilized to access the search results without subsequent selection of the filter types and values or manipulation of the data.

2. The method of claim 1, wherein the request for the widget (320, 330) identifies particular data sets of the health and usage management system to analyze.

3. The method of claim 1 or 2, wherein the search results include graphical representations of the data of the health and usage management system.

4. The method of claim 1, 2, or 3, wherein the widget (320, 330) is a user interface element that visually represents the data in summary form.

5. The method of claim 4, wherein the user interface element provides a status visualization of the data.

6. The method of claim 5, wherein the status visualization of the data is an icon or a complex visualization.

7. The method of claim 1, 2, 3, 4, 5, or 6, wherein the widget management logic includes a tiered user structure comprising a first level and a second level.

8. The method of claim 7, wherein the first level defines user rights for savvy users and the second level defines user rights for average users.

9. The method of claim 1, 2, 3, 4, 5, 6, 7, or 8, further comprising:
selecting filter types and filter values in response to receiving a request for the widget to produce selected filter types and filter values.

10. A computer program product, the computer program product comprising a computer readable storage medium having program instructions for generating a widget (320, 330) within a health and usage management system according to a widget management logic embodied therewith, the program instructions executable by a processor of the health and usage management system to cause the processor to perform:
selecting filter types and filter values (205) in response to receiving a request for the widget;
generating a complex filter (210) based on the filter types and values, the complex filter being configured to manipulate data of the health and usage management system;
executing the complex filter (215) to generate search results; and
generating the widget (220) corresponding to the complex filter and the search results, the widget (320, 330) being utilized to access the search results without subsequent selection of the filter types and values or manipulation of the data.

11. The computer program product of claim 10, wherein the request for the widget identifies particular data sets of the health and usage management system to analyze.

12. The computer program product of claim 10 or 11, wherein the search results include graphical representations of the data of the health and usage management system.

13. The computer program product of claim 10, 11, or 12, wherein the widget (320, 330) is a user interface element that visually represents the data in summary form.

14. The computer program product of claim 10, 11, 12, or 13, wherein the widget management logic includes a tiered user structure comprising a first level and a second level.

15. The computer program product of claim 10, 11, 12, 13, or 14, the program instructions executable by the processor to cause the processor to perform:
selecting filter types and filter values in response to receiving a request for the widget to produce selected filter types and filter values.
